Europäisches Patentamt

European Patent Office

Office européen des brevets

(11) Numéro de publication: **0 049 677**
**B1**

# (12) FASCICULE DE BREVET EUROPEEN

(45) Date de publication du fascicule du brevet: **30.04.86**

(51) Int. Cl.⁴: **C 10 L 5/44**

(21) Numéro de dépôt: **81440022.2**

(22) Date de dépôt: **02.10.81**

(54) **Installation de transformation de déchets ligneux, en particulier de déchets de bois, en granulés combustibles de faible diamètre, et granulés obtenus au moyen de cette installation.**

(30) Priorité: 03.10.80 FR 8021446
07.08.81 FR 8115491

(43) Date de publication de la demande:
14.04.82 Bulletin 82/15

(45) Mention de la délivrance du brevet:
30.04.86 Bulletin 86/18

(84) Etats contractants désignés:
AT BE CH DE GB IT LI LU NL SE

(56) Documents cités:
FR-A-2 337 198
FR-A-2 440 786
US-A-4 211 740

(73) Titulaire: Alsa Méca, Sàrl, Société dite
3, route de Brumath Z.I. Nord Vendenheim
F-67550 Eckwersheim (FR)

(72) Inventeur: Diss, Jean-Marie
14, rue de la Pinède
F-67500 Haguenau (FR)

(74) Mandataire: Nuss, Pierre
10, rue Jacques Kablé
F-67000 Strasbourg (FR)

Courier Press, Leamington Spa, England.

**Description**

La présente invention concerne le domaine de la récupération et de la transformation des déchets ligneux, en particulier des déchets de bois, notamment ceux résultant de l'usinage, et a pour objet une installation de transformation de tels déchets en granulés combustibles de faible diamètre.

L'usinage du bois a généralement pour conséquence un grand volume de déchets sous forme de chutes, d'écorces, de copeaux, de sciures, ou de poussières. Les déchets de certaines essences de bois peuvent être négociés sous forme de sciures ou de plaquettes avec l'industrie papetière, mais cependant à un prix relativement bas, tandis que les autres déchets sont généralement brûlés à la décharge en moyennant des frais d'enlèvement élevés, voire même des taxes spéciales.

Pour transformer ces déchets il a été proposé, notamment, une installation de transformation (US—A 4 211 740) comportant un silo de réception de tous les déchets, à savoir les sciures, les écorces et les autres végétaux, un brûleur à poudre de bois équipé d'un système d'allumage au fuel et d'une alimentation en air comprimé et produisant de l'air chaud, le produit à sécher passant par un sècheur à vis monté dans une double enveloppe, dans laquelle passe l'air chaud produit par le brûleur. Dans cette installation, les déchets ne sont broyés qu'après passage dans le sècheur, un mélangeur réceptionnant les déchets séchés et broyés ainsi que les déchets secs et broyés d'origine, et les fines, en retour du tamisage, l'ensemble passant par un alimentateur à double paroi pour réchauffer le produit avant passage dans la presse, à une température de 93° à 121° C. En sortie de presse, il est effectué un criblage puis un refroidissement des granulés, dont l'humidité finale est de 10 % environ.

Cette installation ne peut fonctionner que globalement, en effet le sècheur ne fonctionne que si la presse tourne, car les fines en sortie de tamisage servent de combustible au sècheur, et la presse ne tourne que si le sècheur marche, les gaz chauds de celui-ci servant au réchauffage des particules de bois avant introduction dans le presse, aucun stockage entre la presse et le sècheur n'étant prévu.

La présente invention a pour but de pallier ces inconvénients.

Elle a, en effet, pour objet une installation de transformation de déchets ligneux, en particulier de déchets de bois, en granulés combustibles de faible diamètre, essentiellement constituée par une chaudière alimentée à partir d'un silo à écorces broyées par l'intermédiaire d'un caisson de dosage, et par un sècheur alimenté par les gaz de combustion de la chaudière, caractérisée en ce que le silo est un silo à écorces broyées, en ce que le sècheur est un sècheur statique et mécanique alimenté par l'air de refroidissement de la chaudière, et en sciures humides, à partir d'un silo à sciures humides, un cyclone de séparation des sciures et des fumées, étant raccordé à la sortie du sècheur et renvoyant et atmosphère libre l'air de séchage chargé des vapeurs d'eau résiduelles de la déshydratation ainsi que les fumées, à sa partie supérieure, et en ce que la partie inférieure du cyclone alimente un silo à sciures sèches relié par l'intermédiaire d'un caisson de dosage, d'un broyeur et d'un mélangeur à une presse à granuler, dont la sortie dèbouche dans un dispositif refroidisseur-tamiseur déversant les granulés aux dimensions désirées dans un élévateur à godets, et par des silos de stockage desdits granulés.

Suivant une variante de réalisation de l'invention, la chaudière est reliée, par l'intermédiaire d'un générateur d'air chaud prolongé par une chambre de dépôt, à un tambour sècheur horizontal à trois parcours, qui est alimenté en écorces et déchets de bois humides sous forme de micro-plaquettes, et en sciures humides par l'intermédiaire d'un groupe de transport et de dosage relié à un silo à écorces et déchets de bois humides sous forme de micro-plaquettes, et à sciures humides, et la sortie du tambour sècheur horizontal débouche dans un cyclone de séparation renvoyant en atmosphère libre l'air de séchage chargé des vapeurs d'eau résiduelles de la déshydratation, ainsi que les fumées, à sa partie supérieure, et alimentant à sa partie inférieure une écluse rotative d'alimentation d'un crible vibrant de séparation des sciures et des micro-plaquettes dont les sorties sont reliées, d'une part, pour les déchets à forte granulométrie, à un silo à combustible, alimentant le foyer de la chaudière, et, d'autre part, pour les sciures, après passage dans un appareil de contrôle d'humidité en continu, à un silo à sciures sèches relié à la presse à granuler.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels:

la figure 1 est une vue en élévation latérale de l'installation conforme à l'invention, et

la figure 2 est une vue en plan d'une variante de réalisation de l'installation de la figure 1.

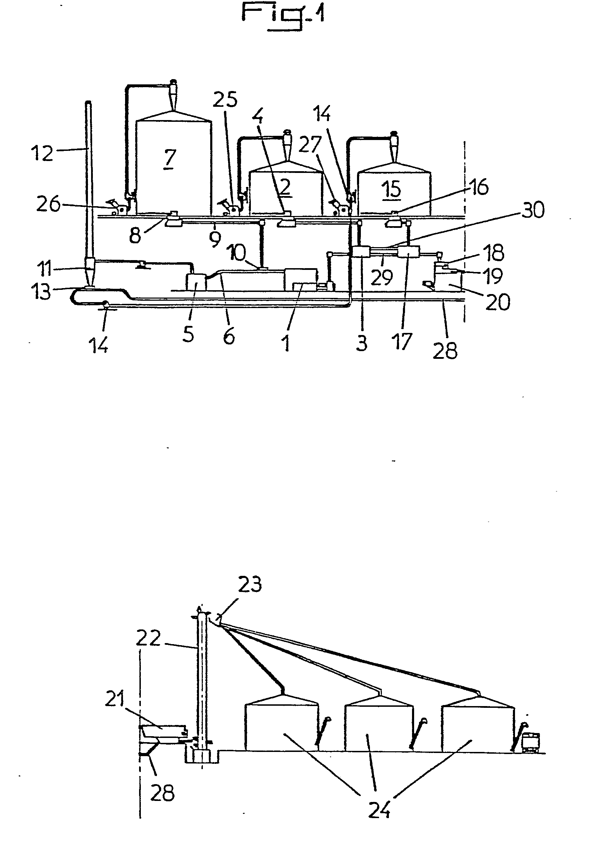

L'installation de transformation de déchets ligneux, en particulier de déchets de bois, en granulés combustibles de faible diamètre conforme à l'invention est essentiellement constituée, comme le montre la figure 1 des dessins annexés, par une chaudière 1 alimentée en écorces broyées à partir d'un silo à écorces broyées 2 par l'intermédiaire d'un caisson de dosage 3 relié à un extracteur 4 disposé dans ledit silo 2, par un sécheur statique et mécanique 5 alimenté à travers une conduite 6 par les gaz de combustion, de la chaudière 1, et/ou par l'air de refroidissement de l'échangeur de la chaudière 1, et en sciures humides à partir d'un silo à sciures humides 7 au moyen d'un extracteur 8, d'une vis de transport 9, et d'une écluse rotative 10 dèbouchant dans la conduite 6, et par un cyclone 11 de séparation des sciures et des fumées. Dans sa partie supérieure, le cyclone 11 est relié à une cheminée 12 d'évacuation des gaz de combustion et de la vapeur d'eau provenant du sécheur statique et mécanique 5, et les sciures séchées sont reprises à la base du cyclone 11 par l'intermédiaire d'une écluse rotative 13, et propulsées, au moyen de ventilateurs de circulation 14, dans un silo à sciures sèches 15. Dans la base de ce dernier pénètre un extracteur 16, qui alimente un caisson de dosage 17 relié par l'intermédiaire d'un broyeur 18 et d'un mélangeur 19 à une presse à granuler 20. Cette dernière est munie de filières de petit diamètre, par exemple de 6,4 mm de diamètre, et débite des granulés échauffés par le passage dans les filières, qui sont repris par un dispositif refroidisseur-tamiseur 21 éliminant les éléments hors normes, et dont la sortie débouche par l'intermédiaire d'une vis de transfert, ou analogue, dans un élévateur à godets 22 déversant les granulés obtenus, par l'intermédiaire d'une trémie de distribution 23, dans des silos de stockage 24.

Les silos 2, 7 et 15 sont munis chacun d'un dispositif de broyage et de chargement respectif 25 à 27 pour l'introduction directe d'écorces et de déchets dans les silos considérés, les déchets de granulométrie trop importante étant automatiquement réduits à la granulométrie désirée.

Il est également possible de ne prévoir qu'un seul broyeur à déchets pouvant être relié aux divers silos au moyen d'une boîte de connexion.

A sa partie inférieure, le dispositif refroidisseur-tamiseur 21 est muni d'un orifice de rejet des granulés hors normes relié, par l'intermédiaire d'une conduite 28 et des ventilateurs de circulation 14 au silo à sciures sèches 15 afin de subir un nouveau cycle de traitement. Il est également possible de réinjecter ces granulés directement dans le broyeur 18.

Les caissons de dosage 3 et 17 sont reliés entre eux par deux vis de transport 29 et 30 fonctionnant en sens inverse, la vis 29 servant à transporter des sciures sèches vers le caisson 3 en vue de démarrage de la chaudière, et la vis 30 pouvant transporter des écorces broyées vers le caisson 17 en vue de réaliser un mélange d'écorces et de sciures sèches avant la transformation en granulés dans la presse 20.

Le mélange de matière pénétrant dans la presse 20 présente généralement un degré d'humidité de 12 à 18 %, de sorte que, sous l'effet de la pression et de l'échauffement dus au filage, les particules de bois s'amalgament de manière durable sans adjonction de liant. Cependant, pour certaines essences de bois, il peut être prévu d'adjoindre, dans le mélangeur 19, de faibles doses de colles ou de résines.

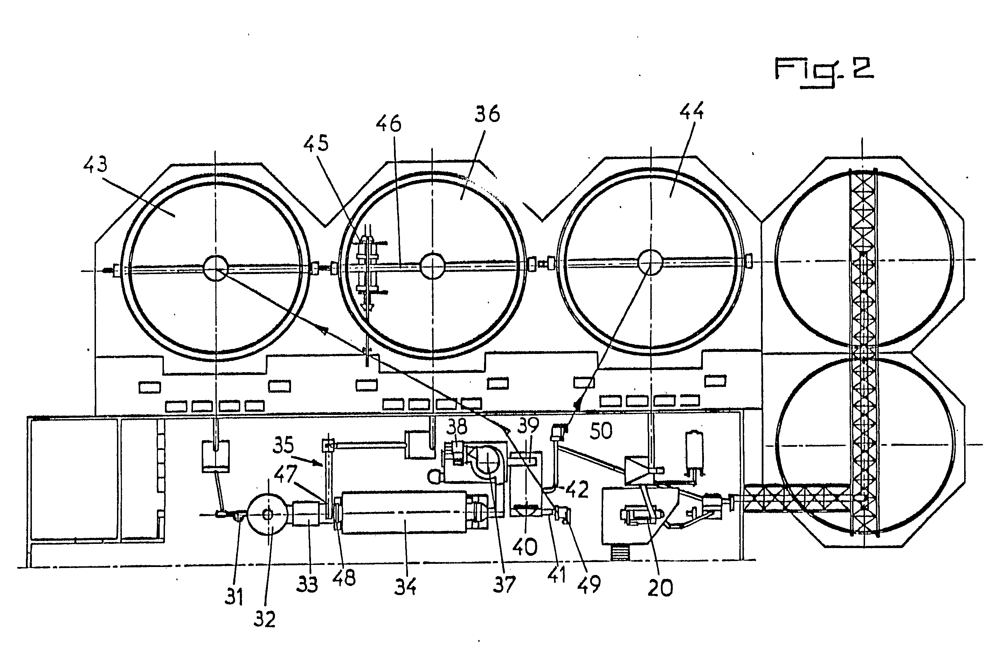

La figure 2 représente une variante de réalisation de l'installation conforme à l'invention, dans laquelle la chaudière 31 est reliée, par l'intermédiaire d'un générateur d'air chaud 32 prolongé par une chambre de dépôt 33, à un tambour sécheur horizontal 34 à trois parcours. Ce tambour 34 est alimenté en écorces et déchets de bois humides sous forme de micro-plaquettes, et en sciures humides par l'intermédiaire d'un groupe de transport et de dosage 35 relié à un silo 36 à écorces et déchets de bois humides sous forme de micro-plaquettes, et à sciures humides. La sortie du tambour 34 débouche dans un cyclone de séparation 37, qui évacue en atmosphère libre l'air de séchage chargé des vapeurs d'eau résiduelles de la déshydratation, ainsi que les fumées à sa partie supérieure 38, et qui alimente à sa partie inférieure une écluse rotative 39 d'alimentation d'un crible vibrant 40 séparant les sciures et les micro-plaquettes, et dont les sorties 41 et 42 sont reliées à un silo à combustible 43 pour les déchets à forte granulométrie, et à un silo 44 à sciures sèches pour les sciures, après passage dans un appareil de contrôle d'humidité en continu non représenté.

Conformément à une caractéristique de l'invention, en aval du silo 36 à écorces et déchets de bois humides sous forme de micro-plaquettes, et à sciures humides, est prévue une fosse de dépotage, non représentée, équipée d'un système d'extraction à poussoirs hydrauliques manoeuvrés par vérins alimentés en fluide à haute pression, ce système étant raccordé a une broyeur rotatif dont la sortie est reliée, par l'intermédiaire d'un ventilateur de transport et d'un cyclone de séparation, au silo 36. Les matières premières telles que sciures, déchets de bois, écorces et autres chutes d'usinage sont ainsi rassemblées dans la fosse de dépotage et traitées en vue de réduire les déchets les plus importants en micro-plaquettes dont les dimensions peuvent être réglées au choix, puis elles sont stockées dans le silo 36 en état d'humidité naturelle avant séchage.

Le silo 36 à écorces et déchets de bois humides sous forme de micro-plaquettes et à sciures humides, le silo à combustible 43, et le silo à sciures sèches 44 présentent avantageusement un fond plat, et sont munis chacun d'un groupe de poussoirs hydrauliques 45 à effet symétrique déversant le produit dans une vis collectrice 46 placée sur le diamètre du silo et reliée à un groupe de transport et de dosage.

Le groupe de transport et de dosage 35 d'alimentation du tambour sécheur horizontal 34 est relié à ce dernier par l'intermédiaire d'une goulotte d'entrée verticale 47 équipée d'un venturi 48 relié à la sortie de la chambre de dépôt 33.

Le générateur d'air chaud 32 est relié au foyer de la chaudière 31, et est constitué par un corps cylindrique vertical à double paroi dans lequel s'effectue un mélange fumée-air secondaire. La sortie de ce générateur 32 débouche dans la chambre de dépôt 33, qui est isolée et à simple parcours et permet la régularisation des débits et des températures, ainsi que la retenue par gravité des grosses particules imbrûlées en suspension.

Le mélange fumée-air secondaire est injecté dans le tambour sécheur horizontal 34 à travers le venturi 48, qui en accélère la vitesse, et est mélangé aux micro-plaquettes et sciures humides à sécher.

Le tambour sécheur 34 est du type à trois parcours et est constitué par un cylindre horizontal entraîné en rotation par un moto-variateur électrique et comportant intérieurement des aubes directrices, dont la direction et la forme sont telles qu'elles permettent un passage rapide des particules légères de sciure avec le flux d'air de séchage, et un passage plus lent des micro-plaquettes de déchets de bois et d'écorces.

La température de l'air de séchage à l'entrée et à la sortie du tambour sécheur 34 est contrôlée en permanence au moyen de détecteurs connus et elle est régulée par une boucle de surveillance électronique travaillant en temps réel.

Les déchets de forte granulométrie issus de la sortie 41 du crible vibrant 40 sont évacués au moyen d'un groupe moto-ventilateur 49 vers le silo 43, d'où ils peuvent être extraits pour alimenter la trémie d'admission du foyer de la chaudière 31, et les sciures sèches sont également transportées grâce à un groupe moto-ventilateur 50 vers le silo 44 formant tampon avant extraction et dosage pour l'introduction dans la presse à granuler 20.

Selon une autre caractéristique de l'invention, pour augmenter la production nominale de la presse à granuler 20 et pour diminuer la fatigue du matériel, le corps de presse est muni d'une buse d'injection de vapeur sèche basse pression et d'une buse d'injection d'huile ligno-cellulosique améliorant le coefficient de glissement des fibres de bois dans la filière de production.

L'ensemble des dispositifs de commande des diverses parties de l'installation, ainsi que les détecteurs de température, les organes de contrôle de qualité, d'humidité, et autres, et les circuits de régulation sont reliés à un automate programmable électronique permettant l'automatisation des séquences de démarrage et d'arrêt d'une partie ou de toute l'installation, la gestion des matières premières et des produits finis, ainsi que la détection des pannes, cet automate formant une unité centrale de commande comportant, en outre, un écran vidéo-couleur avec tableau synoptique de fonctionnement et affichage de données importantes, un clavier de dialogue avec la mémoire, et une imprimante pour l'archivage des éléments importants.

Un tel automate est avantageusement implanté dans un poste de commande et permet une surveillance et un fonctionnement totalement automatique de l'installation.

Les granules obtenus avec l'installation conforme à l'invention peuvent être distribués en vrac ou bien être conditionnés en sacs, ou autres, et peuvent facilement être utilisés dans des chaudières existantes à la place des combustibles solides et liquides usuels.

L'installation conforme à l'invention a été décrite à propos d'une transformation des déchets de bois en combustibles granuleux, mais peut également être utilisée pour la transformation d'autres résidus ligneux encore inexploités, tels que les taillis, la paille, les déchets de canne à sucre, etc.

Grâce à l'invention, il est possible de réaliser une récupération complète de déchets ligneux, en particulier des déchets de bois, et leur transformation en granulés combustibles pouvant être distribués en vrac ou conditionnés, et utilisables dans des chaudières existantes à la place des combustibles courants. En outre, l'installation peut être conçue pour diverses capacités de production, et peut être mise en place soit directement dans une entreprise de transformation du bois, soit dans une entreprise de collecte de déchets de bois.

Bien entendu, l'invention n'est pas limitée aux modes de réalisation décrits et représentés aux dessins annexés. Des modifications restent possibles, notamment du point de vue de la constitution des divers éléments, ou par substitution d'équivalents techniques, sans sortir pour autant du domaine de protection de l'invention.

**Revendications**

1. Installation de transformation de déchets ligneux, en particulier de déchets de bois, en granulés combustibles de faible diamètre, essentiellement constituée par une chaudière (1, 31) alimentée à partir d'un silo (2, 43) par l'intermédiaire d'un caison de dosage relié à un extracteur disposé dans le fond du silo (2, 43), et par un sècheur (5, 34) alimenté par les gaz de combustion de la chaudière (1, 31), caractérisée en ce que le silo (2, 43) d'alimentation de la chaudière est un silo à écorces broyées, en ce que le sècheur (5, 34) est un sècheur statique et mécanique (5) alimenté par l'air de refroidissement de la chaudière (1), et en sciures humides, à partir d'un silo à sciures humides (7), ou un tambour sècheur horizontal à trois parcours (34) relié, par l'intermédiaire d'un générateur d'air chaud (32) prolongé par une chambre de dépôt (33) à la chaudière (31), et qui est alimenté en écorces et déchets de bois humides sous forme de micro-plaquettes, et en sciures humides par l'intermédiaire d'un groupe de transport et de dosage (35) relié à un silo (36) à écorces et déchets de bois humides sous forme de micro-plaquettes, et à sciures humides, un cyclone de séparation (11, 37) raccordé à la sortie du sècheur (5, 34) renvoyant en atmosphère libre l'air de séchage chargé des vapeurs d'eau résiduelles de la déshydratation, ainsi que les fumées, à sa partie supérieure, et en ce que la partie inférieure du cyclone (11, 37) alimente, soit directement un silo à sciures sèches (15) relié par l'intermédiaire d'un caisson de dosage (17), d'un broyeur (18), et d'un mélangeur (19) à une presse à granuler (20), soit une écluse rotative (39) d'alimentation d'un crible vibrant (40) de séparation des sciures et des micro-plaquettes dont les sorties (41, 42) sont reliées, d'une part, pour les déchets à forte granulométrie, au silo (43), alimentant le foyer de la chaudière, et d'autre part, pour les sciures, après passage dans un appareil de contrôle d'humidité en continu, à un silo à sciures sèches (44) relié à la presse à granuler (20), dont la sortie débouche dans un dispositif refroidisseur-tamiseur (21) déversant les granulés aux dimensions désirées dans un élévateur à godets (22), et par des silos (24) de stockage desdits granulés reliés à l'élévateur par une trémie de distribution (23).

2. Installation suivant la revendication 1, caractérisée en ce que les silos à écorces broyées (2), à sciures humides (7) et à sciures sèches (15) sont munis chacun d'un dispositif de broyage et de chargement respectif (25 à 27) pour l'introduction directe d'écorces et de déchets dans les silos considérés.

3. Installation suivant la revendication 2, caractérisée en ce que les silos (2, 7, 15) sont reliés par l'intermédiaire d'une boîte de connexion à la sortie d'un broyeur unique.

4. Installation suivant la revendication 1, caractérisée en ce que le dispositif refroidisseur-tamiseur (21) est muni à sa partie inférieure d'un orifice de rejet des granulés hors normes relié, par l'intermédiaire d'une conduite (28) et des ventilateurs de circulation (14) au silo à sciures sèches (15), ou directement au broyeur (18) de la presse à granuler (20).

5. Installation suivant la revendication 1, caractérisée en ce que les caissons de dosage (3, 17) sont reliés entre eux par deux vis de transport (29, 30) fonctionnant en sens inverse, l'une (29) servant à transporter des sciures sèches vers le caisson à écorces broyées (2) et l'autre (30) pouvant transporter des écorces broyées vers le caisson à sciures sèches (17).

6. Installation, suivant la revendication 1, caractérisée en ce qu'en aval du silo (36) à écorces et déchets de bois humides sous forme de micro-plaquettes, et à sciures humides, est prévue une fosse de dépotage, équipée d'un système d'extraction à poussoirs hydrauliques manoeuvrés par vérins alimentés en fluide à haute pression, ce système étant raccordé à un broyeur rotatif dont la sortie est reliée, par l'intermédiaire d'un ventilateur de transport et d'un cyclone de séparation, au silo (36).

7. Installation, suivant la revendication 1, caractérisée en ce que le silo (36) à écorces et déchets de bois humides sous forme de micro-plaquettes et à sciures humides, le silo à combustible (43), et le silo à sciures sèches (44) présentent avantageusement un fond plat, et sont munis chacun d'un groupe de poussoirs hydrauliques (45) à effet symétrique déversant le produit dans une vis collectrice (46) placée sur le diamètre du silo et reliée à un groupe de transport et de dosage.

8. Installation, suivant l'une quelconque des revendications 1 et 7, caractérisée en ce que le groupe de transport et de dosage (35) d'alimentation du tambour sécheur horizontal (34) est relié à ce dernier par l'intermédiaire d'une goulotte d'entrée verticale (47) équipée d'un venturi (48) relié à la sortie de la chambre de dépôt (33).

9. Installation, suivant la revendication 1, caractérisée en ce que le tambour sécheur (34) est du type à trois parcours et est constitué par un cylindre horizontal entraîné en rotation par un moto-variateur électrique et comportant intérieurement des aubes directrices, dont la direction et la forme sont telles qu'elles permettent un passage rapide des particules légères de sciure avec le flux d'air de séchage, et un passage plus lent des micro-plaquettes de déchets de bois et d'écorces.

10. Installation, suivant l'une quelconque des revendications 1, 8 et 9, caractérisée en ce que la température de l'air de séchage à l'entrée et à la sortie du tambour sécheur (34) est contrôlée en permanence au moyen de détecteurs connus et elle est régulée par une boucle de surveillance électronique travaillant en temps réel.

11. Installation, suivant la revendication 1, caractérisée en ce que les déchets de forte granulométrie issus de la sortie (41) du crible vibrant (40) sont évacués au moyen d'un groupe moto-ventilateur (49) vers le silo (43) d'où ils peuvent être extraits pour alimenter la trémie d'admission du foyer de la chaudière (31), et les sciures sèches sont également transportées grâce à un groupe moto-ventilateur (50) vers le silo (44) formant tampon avant extraction et dosage pour l'introduction dans la presse à granuler (20).

12. Installation, suivant la revendication 1, caractérisée en ce que le corps de presse est muni d'une buse d'injection de vapeur sèche basse pression et d'une buse d'injection d'huile ligno-cellulosique améliorant le coefficient de glissement des fibres de bois dans la filière de production.

13. Installation, suivant l'une quelconque des revendications 1 à 12, caractérisée en ce que l'ensemble des dispositifs de commande des diverses parties de l'installation, ainsi que les détecteurs de température, les organes de contrôle de qualité, d'humidité, et autres, et les circuits de régulation sont reliés à un automate programmable électronique permettant l'automatisation des séquences de démarrage et d'arrêt d'une partie ou de toute l'installation, la gestion des matières premières et des produits finis, ainsi que la détection des pannes, cet automate formant une unité centrale de commande comportant, en outre, un écran vidéo-couleur avec tableau synoptique de fonctionnement et affichage de données importantes, un clavier de dialogue avec la mémoire, et une imprimante pour l'archivage des éléments importants.

**Patentansprüche**

1. Einrichtung zur Umwandlung von holzartigen Abfallprodukten, insbesondere von Holzabfällen, in brennbare Pellets mit kleinem Durchmesser, im wesentlichen bestehend aus einem Kessel (1, 31), der von einem Silo (2, 43) aus über eine Dosierkammer beschickt wird, die mit einem am Boden des Silos (2, 43) angeschlossenen Sauggebläse verbunden ist, und aus einem Trockner (5, 34), der durch die Verbrennungsgase des Kessels (1, 31) gespeist wird, dadurch gekennzeichnet, daß das Silo (2, 43) zur Beschickung des Kessels ein Silo für gemahlene Rinde ist, daß der Trockner (5, 34) ein statischer und mechanischer Trockner (5) ist, der durch die Kühlluft des Kessels (1), und mit feuchtem Sägemehl aus einem Silo für feuchtes Sägemehl (7) beliefert wird, oder ein horizontaler Trommeltrockner mit drei Durchgängen (34), der über einen durch eine Abscheidekammer (33) verlängerten Heißluftgenerator (32) mit dem Kessel (31) verbunden ist, und der mit feuchten Rinden- und Holzabfällen in Form von Mikroplättchen, und mit feuchtem Sägemehl, mit Hilfe einer Transport- und Dosierungsanlage (35) beschickt wird, die mit einem Silo (36) für feuchte Rinden- und Holzabfälle in Form von Mikroplättchen, und für feuchtes Sägemehl verbunden ist, wobei ein an den Ausgang des Trockners (5, 34) angeschlossener Absetzzyklon (11, 37) die mit den Dämpfen des Restwassers der Wasserentziehung angereicherte Trockenluft, sowie den Rauch, an seiner Oberseite an die freie Atmosphäre abgibt, und daß die Unterseite des Zyklons (11, 37) entweder direkt ein Silo für trockenes Sägemehl (15), das über eine Dosierungskammer (17), ein Mahlwerk (18), und einen Mischer (19) mit einer Pelletpresse (20) verbunden ist, oder eine Drehschleuse (39) zur Beschickung eines Vibratorsiebs (40) für die Abscheidung des Sägemehls und der Mikroplättchen, beschickt, deren Ausgänge (41, 42) einerseits für die Abfallprodukte mit grober Körnung, mit dem Silo (43), das die Feuerungsanlage des Kessels speist, und andererseits, für das Sägemehl, nach Durchlauf durch ein durchlaufendes Feuchtigkeitskontrollgerät, mit einem Silo für trockenes Sägemehl (44), verbunden sind, das an die Pelletpresse (20) angeschlossen ist, deren Ausgang in einer Kühler-Sieb-Vorrichtung (21) endet, welche die Pellets mit der gewünschten Größe in ein Becherwerk (22) schüttet, und aus Silos (24) für die Lagerung der besagten Pellets, die mit dem Becherwerk über einen Verteilertrichter (23) verbunden sind.

2. Einrichtung nach Anspruch 1, dadurch gekennzeichnet, daß die Silos für gemahlene Rinde (2), feuchtes Sägemehl (7) und trockenes Sägemehl (15) jeweils mit einer entsprechenden Mähl- und Aufgabevorrichtung (25 bis 27) für die direkte Eingabe von Rinde und Abfällen in die vorgesehenen Silos versehen sind.

3. Einrichtung nach Anspruch 2, dadurch gekennzeichnet, daß die Silos (2, 7, 15) über einen Verbindungskasten an den Ausgang eines einzigen Mahlwerks angeschlossen sind.

4. Einrichtung nach Anspruch 1, dadurch gekennzeichnet, daß die Kühler-Sieb-Vorrichtung (21) an ihrer Unterseite mit einer Öffnung zum Auswerfen der außerhalb der Norm liegenden Körner versehen ist, die, über eine Leitung (28) und Umlüfter (14) mit dem Silo für trockenes Sägemehl (15), oder direkt mit dem Mahlwerk (18) der Pelletpresse (20) verbunden ist.

5. Einrichtung nach Anspruch 1, dadurch gekennzeichnet, daß die Dosierkammern (3, 17) untereinander durch zwei Transportschnecken (29, 30) verbunden sind, die in entgegengesetzter Richtung arbeiten, wobei die eine (29) zum Transport der trockenen Sägespäne in Richtung der Kammer für gemahlene Rinde (3) dient, und die andere (30) gemahlene Rindenabfälle zu der Kammer für trockene Sägespäne (17) transportieren kann.

6. Einrichtung nach Anspruch 1, dadurch gekennzeichnet, daß unterhalb des Silos (36) für feuchte Rinden- und Holzabfälle in Form von Mikroplättchen, und für feuchtes Sägemehl, eine Schüttgrube vorgesehen ist, die mit einem Absaugsystem mit hydraulischen Stößeln ausgestattet ist, welche durch mit Hochdruckflüssigkeit gespeiste Zylinder betätigt werden, wobei dieses System an ein Dreh-Mahlwerk angeschlossen ist, dessen Ausgang, über einen Transport-Lüfter und einen Absetzzyklon, mit dem Silo (36) verbunden ist.

7. Einrichtung nach Anspruch 1, dadurch gekennzeichnet, daß das Silo (36) für feuchte Rinde und Holzabfälle in Form von Mikroplättchen und für feuchte Sägespäne, das Brennmaterial-Silo (43) und das Silo für trockene Sägespäne (44) vorteilhaft einen flachen Boden aufweisen, und je mit einem Satz Hydraulikstößel (45) mit Gegentakteffekt versehen sind, die das Produkt in eine Sammelschnecke (46) werfen, welche auf dem Durchmesser des Silos sitzt und mit einer Transport- und Dosieranlage verbunden ist.

8. Einrichtung nach einem der Ansprüche 1 und 7, dadurch gekennzeichnet, daß die Transport- und Dosieranlage (35) für die Beschickung des horizontalen Trommeltrockners (34) an dem letzteren mittels einer mit einem Venturirohr (48) ausgerüsteten, vertikalen Einlaufrutsche (47) angeschlossen ist, das mit dem Ausgang der Absetzkammer (33) verbunden ist.

9. Einrichtung nach Anspruch 1, dadurch gekennzeichnet, daß der Trommeltrockner (34) vom Typ mit drei Durchgängen ist und aus einem horizontalen Zylinder besteht, der durch einen elektrischen Drehzahlvariator in Rotation versetzt wird und innen Umlenkbleche besitzt, deren Richtung und Form so gestaltet ist, daß sie einen schnellen Durchlauf der leichten Sägemehlteilchen mit dem Trockenluftstrom, und einen langsameren Durchlauf der Mikro-Plättchen der Holz- und Rindenabfälle ermöglichen.

10. Einrichtung nach einem der Ansprüche 1, 8 und 9, dadurch gekennzeichnet, daß die Temperatur der Trockenluft am Eingang und am Ausgang des Trommeltrockners (34) fortlaufend mit Hilfe von bereits bekannten Fühlern kontrolliert und durch eine elektronische Überwachungsschleife ferngelenkt wird, die im Echtzeitverfahren arbeitet.

11. Einrichtung nach Anspruch 1, dadurch gekennzeichnet, daß die aus dem Ausgang (41) des Vibratorsiebs (40) herauskommenden Abfälle grober Korngröße mittels eines Lüftersatzes (49) in das Silo (43) abgepumpt werden, woraus sie zur Beschickung des Eingabetrichters zur Feuerung des Kessels (31) entnommen werden können, und die trockenen Sägespäne ebenfalls dank eines Lüftersatzes (50) zu dem Silo (44) befördert werden, das einen Puffer vor der Entnahme und Dosierung für die Eingabe in die Pelletpresse (20) bildet.

12. Einrichtung nach Anspruch 1, dadurch gekennzeichnet, daß der Körper der Presse mit einer Einspritzdüse für Niederdruck-Trockendampf und mit einer Einspritzdüse für Holzzellulose-Öl versehen ist, welches den Gleitfaktor der Holzfasern in der Produktionskette verbessert.

13. Einrichtung nach einem der Ansprüche 1 bis 12, dadurch gekennzeichnet, daß sämtliche Steuervorrichtungen der verschiedenen Teile der Einrichtung sowie die Temperaturfühler, die Organe für Qualitätskontrolle, Feuchtigkeit, und andere, und die Regelkreise, an einem programmierbaren, elektronischen Automaten angeschlossen sind, der die Automatisierung der Anlauf- und Stillstandsequenzen eines Teils oder der gesamten Einrichtung, die Lenkung des Rohmaterials und der Fertigprodukte sowie das Erfassen von Pannen ermöglicht, wobei dieser Automat eine zentrale Steuereinheit bildet, die außerdem einen Farb-Bildschirm mit Symbolsteuerwarte für die Funktion und Anzeige von wichtigen Daten, eine Tastatur für Dialog mit dem Speicher, und einen Drucker für die Archivierung wichtiger Merkmale besitzt.

## Claims

1. An installation for converting ligneous waste, particularly wood waste, into combustible granulated products of small diameter, consisting essentially of a boiler (1, 31) fed from a silo (2, 43) by means of a proportioning bin connected to an extractor disposed in the bottom of the silo (2, 43) and of a drier (5, 34) fed by the combustion gases of the boiler (1, 31), characterised in that the silo (2, 43) for feeding the boiler is a crushed bark silo, in that the drier (5, 34) is a static and mechanical drier (5) fed by the cooling air of the boiler (1) and with damp sawdust from a damp sawdust silo (7) or a three-path horizontal drying drum (34) connected to the boiler (31), by means of a hot-air generator (32) extended by a settling chamber (33), and which is fed with bark and damp wood waste in the form of micro-platelets, and with damp sawdust by means of a conveying and proportioning unit (35) connected to a silo (36) for bark and damp wood waste in the form of micro-platelets, and for damp sawdust, in separating cyclone (11, 37) connected to the outlet of the drier (5, 34) returning to the free atmosphere the drying air laden with residual water vapour from the dehydration, as well as the fumes, at its upper portion, and in that the lower portion of the cyclone (11, 37) feeds, either directly a dry sawdust silo (15) connected by means of a proportioning bin, of a grinder (18) and of a mixer (19) to a granulating press (20) or a rotary lock (39) for feeding a shaking screen (40) for separating the sawdust and the micro-platelets, the outlets (41, 42) for which are connected, on the one hand, for the waste of large granulometry, to the silo (43) feeding the firebox of the boiler and, on the other hand, for the sawdust, after passage through a continuous humidity checking apparatus, to a dry sawdust silo (44) connected to the granulating press (20), the outlet of which leads into a cooling-screening device (21) discharging the granulated product with the desired dimensions into a bucket elevator (22), and of storage silos (24) for said granulated products connected to the elevator by a distribution hopper (23).

2. An installation as claimed in claim 1, characterised in that the crushed-bark (2), damp sawdust (7) and dry-sawdust (15) silos are each equipped with a respective crushing and loading device (25 to 27) for the direct introduction of bark and waste into the silos in question.

3. An installation as claimed in claim 2, characterised in that the silos (2, 7, 15) are connected by means of a connecting box to the outlet of a single crusher.

4. An installation as claimed in claim 1, characterised in that the cooling-screening device (21) is equipped at its lower portion with a rejection orifice for granulated material outside the standard, connected, by means of a pipe (28) and circulation blowers (14), to the dry sawdust silos (15), or directly to the grinder (18) of the granulating press (20).

5. An installation as claimed in claim 1, characterised in that the proportioning bins (3, 17) are interconnected by two screw conveyors (29, 30) working in opposite directions, the one (29) serving to convey dry sawdust to the crushed bark bin (3) and the other (30) being able to convey crushed bark to the dry sawdust bin (17).

6. An installation as claimed in claim 1, characterised in that, downstream of the silo (36) for bark and damp wood waste in the form of micro-platelets and for damp sawdust there is provided a decanting pit equipped with an extraction system with hydraulic push rods actuated by jacks fed with high-pressure fluid, this system being connected to a rotary crusher, the outlet of which is connected to the silo (36) by means of a conveyor blower and a separating cyclone.

7. An installation as claimed in claim 1, characterised in that the silo (36) for bark and damp wood waste in the form of micro-platelets and for damp sawdust, the fuel silo (43), and the dry sawdust silo (44) advantageously have a flat bottom, and are each equipped with a set of hydraulic push-rods (45) with symmetrical action discharging the product into a collecting screw (46) placed on the diameter of the silo and connected to a conveying and proportioning unit.

8. An installation as claimed in any one of the claims 1 and 7, characterised in that the conveying and proportioning unit (35) for feeding the horizontal drying drum (34) is connected to the latter by means of a vertical inlet chute equipped with a venturi (48) connected to the outlet of the settling chamber (33).

9. An installation as claimed in claim 1, characterised in that the drying drum (34) is of the type with three paths and consists of a horizontal cylinder driven in rotation by an electric variable-transmission motor and comprising, internally, guide vanes, the direction and shape of which are such that they permit a rapid passage of the light particles of sawdust with the flow of drying air and a slower passage of the micro-platelets of wood waste and bark.

10. An installation as claimed in any one of the claims 1, 8 and 9, characterised in that the temperature of the drying air at the inlet and at the outlet of the drying drum (34) is permanently monitored by means of known detectors and is regulated by an electronic monitoring loop working in real time.

11. An installation as claimed in claim 1, characterised in that the waste of large granulometry leaving the outlet (41) of the shaking screen (40) is evacuated by means of a motor-blower unit (49) towards the silo (43) from which it can be extracted to feed the inlet hopper of the firebox of the boiler (31), and the dry sawdust is likewise conveyed by means of a motor-blower unit (50) towards the silo (44) forming a buffer before extraction and proportioning for introduction into the granulating press (20).

12. An installation as claimed in claim 1, characterised in that the press body is equipped with an injection nozzle for low-pressure dry steam and an injection nozzle for ligno-cellulosic oil improving the sliding coefficient of the wood fibres in the production die.

13. An installation as claimed in any one of the claims 1 to 12, characterised in that all the control devices for the various parts of the installation, as well as the temperature detectors, the members for checking quality, humidity, and others, and the regulating circuits are connected to an automatic programmable electronic device permitting the automation of the starting and stopping sequences of part or all of the installation, the management of the raw materials and of the finished products as well as the detection of faults, this automatic device forming a central control unit further comprising a video colour screen with block diagram of operation and display of important data, a keyboard for dialogue with the store and a printer for recording important elements.

**0 049 677**

Fig.1

Fig.2